(19) Europäisches Patentamt
European Patent Office
Office européen des brevets

(11) **EP 4 457 953 B1**

(12) **EUROPEAN PATENT SPECIFICATION**

(45) Date of publication and mention
of the grant of the patent:
**16.07.2025  Bulletin 2025/29**

(21) Application number: **22835045.0**

(22) Date of filing: **14.12.2022**

(51) International Patent Classification (IPC):
*H04B 17/336* (2015.01)    *H04B 7/06* (2006.01)
*H04W 16/28* (2009.01)    *G01S 5/02* (2010.01)

(52) Cooperative Patent Classification (CPC):
**H04B 17/336; H04B 7/0695; H04W 16/22;**
**H04W 16/28**

(86) International application number:
**PCT/EP2022/085981**

(87) International publication number:
**WO 2023/126184 (06.07.2023 Gazette 2023/27)**

(54) **METHOD FOR COMPUTING SINR IN A CELLULAR COMMUNICATION SYSTEM**

VERFAHREN ZUR SINR-BERECHNUNG IN EINEM ZELLULAREN KOMMUNIKATIONSSYSTEM

PROCÉDÉ DE CALCUL DU SINR DANS UN SYSTÈME DE COMMUNICATION CELLULAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.12.2021  IT 202100032972**

(43) Date of publication of application:
**06.11.2024  Bulletin 2024/45**

(73) Proprietor: **Telecom Italia S.p.A.**
**20123 Milano (IT)**

(72) Inventors:
• **EPIFANI, Francesco**
**10148 Torino (IT)**
• **LANZO, Roberto**
**10148 Torino (IT)**
• **MINERVA, Giuseppe**
**10148 Torino (IT)**
• **SCHIAVONI, Andrea**
**10148 Torino (IT)**

(74) Representative: **Maccalli, Marco et al**
**Maccalli & Pezzoli S.r.l.**
**Via Settembrini, 40**
**20124 Milano (IT)**

(56) References cited:
**US-A1- 2007 115 800      US-B1- 8 423 047**

**Description**

**Background of the invention**

**Field of the invention**

The present invention relates to a cellular communication system, such as a cellular communication system compliant with fifth generation (5G) technology standard (or 5G cellular communication system). More particularly, the present invention relates to a method for computing (or determining or estimating) a signal-to-interference-plus-noise ratio (SINR) in a 5G cellular communication system, or in any other cellular communication system exploiting or making use of active antennas (such as beamforming active antennas).

**Overview of the related art**

Deployment of 5G cellular communication systems is more and more widespread.

Beamforming active antennas are important components of the 5G cellular communication systems.

A beamforming antenna is a radiating apparatus comprising a plurality of antenna elements (each one corresponding to the smallest radiating element which is part of the radiating apparatus), and a plurality of arrays of antenna elements (array elements). Each array element typically comprises a set of antenna elements (*i.e.,* the smallest set of antenna elements) that can be activated to generate, singularly or together with the other antenna elements of the array element, a directional beam having minimum angular amplitude.

Each array element may generate directional beams by means of proper time or phase shifting of radio signals emitted by the respective antenna elements.

An active antenna is a radiating apparatus that may be described by one or more broadcast radiation patterns and by one or more traffic radiation patterns, and is capable of real-time performing radiation pattern reconfiguration to serve, with performance continuity, user devices that may change position and/or typology of requested services over time.

The broadcast radiation pattern typically identifies the directional (angular) dependence of the strength of broadcast beams from the antenna, such as the beams containing common information for all user devices.

The traffic radiation pattern typically identifies the directional (angular) dependence of the strength of traffic beams from the antenna, such as the beams containing specific information for independent user devices.

SINR is an important parameter to measure a quality of the cellular communication systems, including the 5G cellular communication systems and any other cellular communication system exploiting or making use of beamforming active antennas.

Moreover, SINR may also be used to set (*i.e.,* tune or adjust) one or more network parameters (for example, by exploiting *"Self-Organizing Network"* (SON) functionalities).

US 8423047 B1 discloses a solution directed to facilitating a location-based service for use by a given mobile-device. A location of each of a number of base stations that makes up a portion of a wireless-telecommunications-network is identified. For a given base station, the probability that it provides a level of signal coverage to a geographical area that would enable the mobile-device in the first geographical area to communicate with the network is determined. A density of possible locations that the mobile-device may be within the geographical area is determined. A position for the mobile-device is approximated based on the density. A location-based service is facilitated for use by the mobile-device based on the position of the mobile-device.

**Summary of invention**

The Applicant has found that the known methods of computing SINR are not satisfactory for 5G cellular communication systems, or for any other cellular communication system exploiting or making use of beamforming active antennas.

The Applicant has understood that performance of an array element is a function of array geometry (for example, linear, circular or rectangular), number of antenna elements, spacing between antenna elements, number of interfering users and direction of arrival of the useful and interfering signals.

As a result of it, due to the use of beamforming active antennas, each network cell experiences directional (angular) dependence of the strength broadcast and traffic beams and radiation pattern reconfigurations, whereby a precise SINR computation for each network cell is inherently not possible.

In this respect, the Applicant has faced the above-mentioned issues, and has devised a method for computing SINR in 5G cellular communication systems (or in any other cellular communication system exploiting or making use of beamforming active antennas).

One or more aspects of the present invention are set out in the independent claims, with advantageous features of the same invention that are indicated in the dependent claims, whose wording is enclosed herein *verbatim* by reference (with any advantageous feature being provided with reference to a specific aspect of the present invention that applies *mutatis mutandis* to any other aspect).

More specifically, an aspect of the present invention relates to a method for computing a signal-to-interference-plus-noise ratio in a territorial portion of a geographic area covered by a cellular network.

According to an embodiment, the cellular network comprises a plurality of network cells provided by respective beamforming active antennas each one configured to radiate traffic beams in a plurality of radiating directions depending on number and arrangement of array elements of the beamforming active antenna.

According to said embodiment, a method is provided comprising subdividing each network cell into a plurality of cell sectors each one corresponding to a respective radiating direction among the plurality of radiating directions in which the corresponding beamforming active antenna is configured to radiate.

The method comprises determining, for each cell sector of each network cell, a respective radiation probability indicative of the probability that the respective beamforming active antenna radiates traffic beams in that cell sector.

Each radiation probability depends on a user propensity indicative of a propensity of users of the cellular network to be physically located and/or to generate service requests in that cell sector of that network cell.

The method comprises determining, among the plurality of network cells, a best server network cell and at least one interfering network cell associated with the territorial portion.

The method comprises computing the signal-to-interference-plus-noise ratio in the territorial portion based on a useful signal strength associated with the best server network cell, and at least one interfering signal strength associated with the at least one interfering network cell.

Each interfering signal strength is weighted by a respective radiation probability associated with the cell sector of the respective interfering network cell at least partially covering the territorial portion.

According to an embodiment, the user propensity is based on at least one among:

- procedure and/or event traces of user devices within the territorial portion;
- radio measurements reported by the user devices within the territorial portion;
- territorial data related to the territorial portion.

According to an embodiment, the territorial data comprises at least one among:

- an indication of a road network in the territorial portion;
- an indication of an urbanization rate in the territorial portion;
- an indication of a type or use of the territory of the territorial portion.

According to an embodiment, said determining, for each cell sector of each network cell, a respective radiation probability comprises normalizing the user propensity associated with the cell sector on an overall user propensity associated with the network cell.

According to an embodiment, said determining, for each cell sector of each network cell, a respective radiation probability further comprises, if, for each network cell, at least one first cell sector exists whose radiation probability is lower than or equal to a threshold radiation probability:

- setting the radiation probability of each first cell sector at the threshold radiation probability; and
- for each second cell sector whose radiation probability is higher than the threshold radiation probability, setting the respective radiation probability at the radiation probability subtracted by a compensation amount indicative of an overall deviation between the threshold radiation probability and the radiation probabilities of the at least one first cell sector.

According to an embodiment, for each second cell sector, the compensation amount is proportional to a deviation between the radiation probability associated with the second cell sector and the threshold radiation probability, with respect to an overall deviation between the radiation probabilities associated with the second cell sectors and the threshold radiation probability.

According to an embodiment, said subdividing each network cell into a plurality of cell sectors comprises subdividing each network cell into a plurality of front and rear cell sectors associated with main and back lobes, respectively, of a radiation pattern of the respective beamforming active antenna.

Each rear cell sector is opposite to a respective front cell sector with respect to the respective beamforming active antenna.

Said determining, for each cell sector of each network cell, a respective radiation probability comprises determining the radiation probability for each front cell sector and assigning to each rear cell sector the radiation probability associated with the respective opposite front cell sector.

According to an embodiment, the method comprises managing the cellular network based on the computed signal-to-interference-plus-noise ratio.

According to an embodiment, said managing the cellular network based on the computed signal-to-interference-plus-noise ratio comprises at least one between:

outputting the computed signal-to-interference-plus-noise ratio, and
setting one or more parameters of the cellular network based on the computed signal-to-interference-plus-noise ratio.

Another aspect of the present invention relates to a system configured to implement the method of above.

According to an embodiment, the system is configured to compute a signal-to-interference-plus-noise ratio in a territorial portion of a geographic area covered by a cellular network, wherein the cellular network comprises a plurality of network cells provided by respective beamforming active antennas each one configured to radiate traffic beams in a plurality of radiating directions depending on number and arrangement of array elements of the beamforming active antenna.

The system comprises a computation module configured for:

subdividing each network cell into a plurality of cell sectors each one corresponding to a respective radiating direction among the plurality of radiating directions in which the corresponding beamforming active antenna is configured to radiate;
determining, for each cell sector of each network cell, a respective radiation probability indicative of the probability that the respective beamforming active antenna radiates traffic beams in that cell sector, each radiation probability depending on a user propensity indicative of a propensity of users of the cellular network to be physically located and/or to generate service requests in that cell sector of that network cell;
determining, among the plurality of network cells, a best server network cell and at least one interfering network cell associated with the territorial portion, and
computing the signal-to-interference-plus-noise ratio in the territorial portion based on a useful signal strength associated with the best server network cell, and at least one interfering signal strength associated with the at least one interfering network cell, wherein each interfering signal strength is weighted by a respective radiation probability associated with the cell sector of the respective interfering network cell at least partially covering the territorial portion.

## Brief description of the annexed drawings

These and other features and advantages of the present invention will be made apparent by the following description of some exemplary and non-limitative embodiments thereof. For its better intelligibility, the following description should be read making reference to the attached drawings, wherein:

**Figure 1** schematically shows a cellular communication system according to an embodiment of the present invention;
**Figures 2A** and **2B** schematically show examples of array elements implementing configurations of a beamforming antenna, and corresponding beam distributions, respectively;
**Figure 3** shows an activity diagram of a method according to an embodiment of the present invention;
**Figure 4** schematically shows cell sectors for a 4x1 beamforming antenna, an 8x1 beamforming antenna and an 8x2 beamforming antenna, according to an ambodiment of the present invention;
**Figure 5A** shows an exemplary envelope traffic radiation pattern (left drawing), and an exemplary "modulated" envelope traffic radiation pattern (right drawing) for an 8x1 beamforming antenna, according to an embodiment of the present invention, and
**Figure 5B** shows exemplary opposite front and rear cell sector pairs for an envelope traffic radiation pattern of an 8x1 beamforming antenna, according to an embodiment of the present invention.

## Detailed description of preferred embodiments of the invention

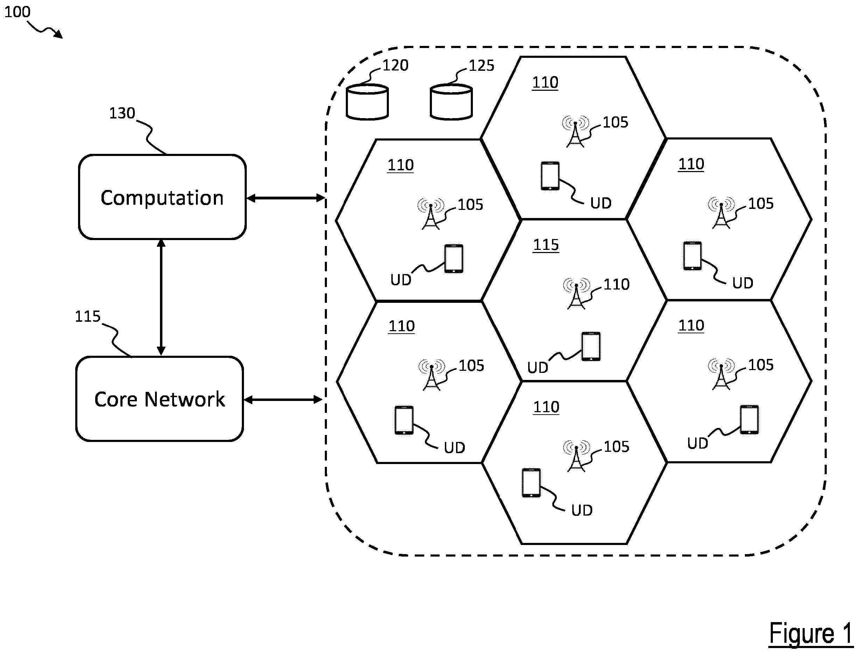

With reference to the drawings, a cellular communication system **100** (*i.e.*, *a* portion thereof) according to an embodiment of the present invention is schematically illustrated in **Figure 1.**

In the following, when one or more features of the cellular communication system **100** (and of a method implemented by it) are introduced by the wording "according to an embodiment", they are to be construed as features additional or alternative to any features previously introduced, unless otherwise indicated and/or unless there is evident incompatibility among feature combinations that is immediately apparent to the person skilled in the art.

In the following, only relevant features of the cellular communication system **100** that are deemed relevant for the understanding of the present invention will be discussed, with well-known and/or obvious variants of the relevant features that are omitted for the sake of conciseness.

According to an embodiment, the cellular communication system **100** is compliant with fifth generation (5G) technology standard for broadband cellular communication systems.

According to an embodiment, the cellular communication system **100** comprises a cellular network (*e.g.*, a 5G cellular network).

According to an embodiment, the cellular network comprises a plurality of cellular communication equipment or base stations **105** providing radio coverage over a geographic area (usually referred to as geographic area covered by the cellular network).

According to an embodiment, the base stations **105** (or at least a subset thereof) comprise 5G base stations (usually referred to as gNodeBs). Just as an example, each 5G base station may have a standalone architecture or a CU (*"Central Unit"*) - DU (*"Distributed Unit"* ) architecture.

According to an embodiment, each base station **105** is configured to provide radio coverage over (or, equivalently, is associated with) one or more regions of the geographic area, or network cell, **110.**

In the exemplary considered embodiment, the cellular network comprises a plurality of network cells **110.**

In the exemplary, simplified scenario herein considered, each base station **105** is associated with a respective network cell **110.** In practical scenarios, each base station **105** may be associated with a plurality of network cells (such as three network cells). Without losing generality, each base station **105** may be associated with a number of network cells depending on the architecture of the base station **105.**

According to an embodiment, as exemplary illustrated, each network cell **110** is hexagonal in shape. In practice, though, the shape of each network cell **110** may differ significantly from an ideal hexagonal shape, *e.g.* due to geographical and/or propagation characteristics or constraints in the region (of the geographic area) identified by the network cell.

According to an embodiment, the base station **105** allow user devices **UD** within the respective network cells **110** (and connecting/connected to the cellular communication system **100)** to exchange data traffic (*e.g.*, web browsing, e-mailing, voice, or multimedia data traffic).

The user devices **UD** may for example comprise personal devices owned by users of the cellular newtork (the users being for example subscribers of services offered by the cellular communication system **100). Examples of user devices **UD** comprise, but are not limited to, mobile phones, smartphones, tablets, personal digital assistants and computers.

According to an embodiment, the cellular network forms the radio access network.

According to an embodiment, the radio access network (and, more generally, the cellular communication system **100)** is based on NR (*"New Radio")* radio access technology, *i.e.* the radio access technology developed by 3$^{rd}$ Generation Partnership Project (3GPP) for the 5G (fifth generation) cellular network.

According to an embodiment, the cellular communication system **100** may support one or more further radio access technologies among UTRA (*"UMTS Terrestrial Radio Access"*), WCDMA ("*Wideband Code Division Multiple Access"),* CDMA2000, LTE ("*Long Term Evolution*"*)* and LTE-Advanced radio access technologies.

According to an embodiment, the radio access network is communicably coupled *(e.g.,* by a wired coupling and/or wireless coupling) with one or more core networks, such as the core network **115.** The core network **115** may be any type of network configured to provide aggregation, authentication, call control / switching, charging, service invocation, gateway and subscriber database functionalities, or at least a subset *(i.e.,* one or more) thereof.

According to an embodiment, the core network **115** comprises a 5G core network.

According to an embodiment, the core network **115** is communicably coupled with other networks, such as the Internet and/or public switched telephone networks (not shown).

According to an embodiment, the cellular communication system **100** is configured to collect procedure and/or event traces at respective network apparatuses (such as the base stations **105).**

According to procedure and/or event traces, for each user device **UD** connected to the cellular communication system **100,** procedures and/or events (including, but are not limited to, voice call, data call, and related signaling procedures) are traced, *e.g.* in order to allow periodically detecting the signal strenghts associated with a respective serving network cell (and, preferably, the signal strenghts associated with network cells adjacent to the serving network cell).

According to an embodiment, the traced procedures and/or events are geo-localized traced procedures and/or events.

According to an embodiment, geo-localization of the traced procedures and/or events may be achieved by means of *"Angle of Arrival"* information, *"Global Navigation Satellite System"* (GNSS) / *"Assisted Global Navigation Satellite System"* (A-GNSS) information, and triangulation techniques.

According to an embodiment, the cellular communication system **100** is configured to collect radio measurements reported by the user devices **UD** connected to the cellular network. According to an embodiment, radio measurement reporting is performed by the user devices **UD** through *"Minimization of Drive Test"* (MDT) functionality.

According to an embodiment, the radio measurements reported by the user devices **UD** through MDT functionality are combined with positioning information. Positioning information may for example be provided by the user devices **UD** *(e.g.,* by exploiting GPS and/or GNSS/A-GNSS functionalities thereof) and/or computed by the cellular communication system **100** *(e.g.,* by the core network **115**) based on the radio measurements. Examples of positioning information computed by the cellular communication system **100** include, but are not limited to, ranging measurements based on localization signals emitted by any properly configured base station, and/or triangulations on signals of the cellular network.

In the following, the procedures and/or events traces, and/or the radio measurements reported by the user devices **UD** (for example, through MDT functionality) will be concisely referred to as tracing/reporting data.

According to an embodiment, the tracing/reporting data comprises geo-localized tracing/reporting data for each one of a plurality of territorial portions of the geographic area (hereinafter, territorial pixels). In this embodiment, for each territorial pixel, the procedures and/or events traces comprise procedure and/or event traces of user devices within the territorial pixel, and the radio measurements comprise radio measurements reported by the user devices within the territorial pixel.

According to an embodiment, each territorial pixel represents a small or relatively small portion of the geographic area. Just as an example, each territorial pixel may have a size of approximatively 50 m x 50 m in extra-urban scenarios and approximatively 10 m x 10 m in urban scenarios.

According to an embodiment, each territorial pixel is identified by latitude i and longitude *j* coordinates - hereinafter, coordinates *(i,j)*.

According to an embodiment, each network cell at least partially covers, or at least partially overlaps to, a plurality of *(i.e.,* two or more) territorial pixels.

According to an embodiment, each territorial pixel may be covered by one or more network cells. In the following, for the sake of conciseness, each network cell at least partially covering, or at least partially overlapping to, a territorial pixel wil be referred to as overlapping network cell.

According to an embodiment, the cellular communication system **100** comprises one or more databases (herinafter, network database) **120** for storing the *(e.g.,* geo-localized) tracing/reporting data associated with each territorial pixel.

According to an embodiment, the network database **120** is configured to store, for each territorial pixel, the tracing/reporting data resulting from a measurement campaign performed over a time period (hereinafter, campaign time period) in that territorial pixel. Just as an example, the campaign time period may be of the order of one or more days.

According to an embodiment, the network database **120** may be updated periodically.

According to an embodiment, the network database **120** may be updated aperiodically.

As better discussed in the following, in embodiments of the present invention the tracing/reporting data stored in the network database **120** may be used for estimating a relative importance of each territorial pixel in terms of amounts of data traffic (or, equivalently, of service requests) that are expected to be generated in that territorial pixel.

According to an embodiment, the network database **120** is located within the cellular network (as illustrated). According to an alternative embodiment, not shown, the network database **120** is located within the core network **115** *(e.g.,* in one or more modules thereof). Without losing generality, the network database **120** may be located in any other entity of the cellular network or of the cellular communication system **100.**

According to an embodiment, the cellular communication system **100** comprises one or more databases (herinafter, territorial database) **125** for storing territorial data related to each territorial pixel.

According to an embodiment, the territorial data comprises, for each territorial pixel, an indication of a road network in that territorial pixel, such as type of roads *(e.g.,* highways, expressways, municipal roads and/or provincial roads) and road lengths.

According to an embodiment, additionally or alternatively to the indication of the road network, the territorial data comprises, for each territorial pixel, an indication of an urbanization rate in that territorial pixel. By urbanization rate it is herein meant a level of urban development relative to the overall population.

According to an embodiment, additionally or alternatively to the indication of the road network and/or to the indication of the urbanization rate, the territorial data comprises, for each territorial pixel, an indication of a type or use of the respective territory *(e.g.,* urban territory, suburban territory, rural territory and/or cultivated territory).

According to an embodiment, the territorial database **125** may be updated periodically.

According to an embodiment, the territorial database **125** may be updated aperiodically.

As better discussed in the following, in embodiments of the present invention the territorial data stored in the territorial database **125** may be used for estimating a relative importance of each territorial pixel in terms of amounts of data traffic (or, equivalently, of service requests) that are expected to be generated in that territorial pixel.

According to an embodiment, the territorial database **125** is located within the cellular network (as illustrated). According to an alternative embodiment, not shown, the territorial database **125** is located within the core network **115** *(e.g.,* in one or more modules thereof). Without losing generality, the network database **125** may be located in any other entity of the cellular network or of the cellular communication system **100.**

According to an embodiment, the cellular communication system **100** comprises one or more computation modules **130** for computing a signal-to-interference-plus-noise ratio (SINR) associated with each territorial pixel.

As better discussed in the following, according to an embodiment the computation module **130** is configured to compute the SINR based on at least one between the tracing/reporting data stored in the network database **115** and the territorial data stored in the territorial database **125** (this is schematically shown in the figure by arrow connection between the computation module **130** and the cellular network). However, as better discussed in the following, embodiments of the present invention may be envisaged in which none between the tracing/reporting data and the territorial data is taken into account for computing the SINR.

As better discussed in the following, according to an embodiment the cellular communication system **100** is configured to suitably process the computed SINR.

According to an embodiment, the cellular communication system **100** may be configured to output *(e.g., on request)* the computed SINR *(e.g., for statistical purposes).*

According to an embodiment, the cellular communication system **100** may be configured to set *(i.e., tune or adjust)* one or more parameters of the cellular network (hereinafter, network parameters), such as antenna parameters, based on the computed SINR. Without losing generality, the cellular communication system **100** may be configured to set, based on the computed SINR, the network parameter(s) by exploiting functionalities of one or more among the core network **115,** the computation module 130 and a *"Self Organizing Network"* (SON) module (not shown).

According to an embodiment, each base station **105** comprises one or more electronic apparatuses (not shown). Examples of electronic apparatuses include, but are not limited to, transceivers and digital signal processors.

According to an embodiment, each base station **105** comprises one or more radiating apparatuses or antennas.

According to an embodiment, the base stations **105,** or at least a subset thereof, comprise beamforming active antennas.

By beamforming antenna, it is herein meant a radiating apparatus comprising a plurality of antenna elements (each one corresponding to the smallest radiating element which is part of the radiating apparatus), and a plurality of arrays of antenna elements (hereinafter concisely referred to as array elements), each one comprising a set of antenna elements *(i.e.,* the smallest set of antenna elements) that can be singularly activated to generate, together with the other antenna elements of the array element, a directional beam having minimum angular amplitude. Just as an example, each array element may generate directional beams by means of proper time or phase shifting of the radio signals emitted by the respective antenna elements.

A beamforming antenna may be usually indicated by a "product" between a number of array elements arranged in horizontal radiating direction $H$ (hereinafter, horizontal array elements) $N_{AR}^{H}$ and a number of array elements arranged in vertical radiating direction V (hereinafter, vertical array elements) $N_{AR}^{V}$.

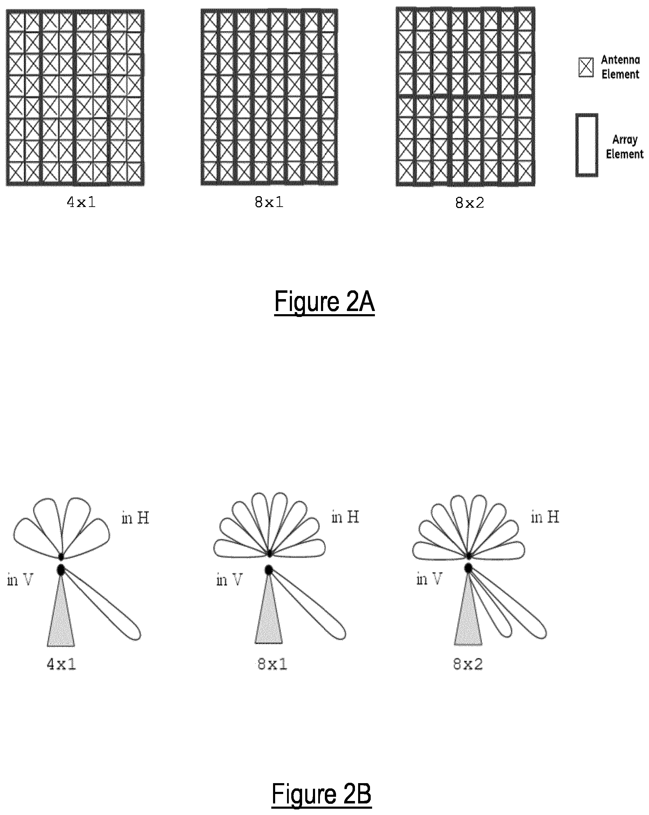

Examples of array elements implementing a 4x1 beamforming antenna *(i.e.,* $N_{AR}^{H}=4$ and $N_{AR}^{V}=1$ ), a 8x1 beamforming antenna *(i.e.,* $N_{AR}^{H}=8$ and $N_{AR}^{V}=1$ ), and a 8x2 beamforming antenna *(i.e.,* $N_{AR}^{H}=8$ and $N_{AR}^{V}=2$ ) are schematically illustrated in **Figure 2A,** and the corresponding beam distributions are illustrated in **Figure 2B.**

By active antenna, it is herein meant a radiating apparatus that:

- may be described by one or more broadcast radiation patterns and by one or more traffic radiation patterns, and
- is capable of real-time performing radiation pattern reconfiguration to serve, with performance continuity, user devices **UD** that may change position and/or typology of requested services over time.

For the purposes of the present disclosure, a broadcast radiation pattern identifies the directional (angular) dependence of the strength of the broadcast beams from the antenna. By broadcast beams generated by a base station **105** are herein meant the beams containing common information for all user devices, and determining a size of the respective network cell **110.** The broadcast beams may relate to one or more logical channels, such as broadcast channel.

For the purposes of the present disclosure, a traffic radiation pattern identifies the directional (angular) dependence of the strength of the traffic beams from the antenna. By traffic beams generated by a base station **105** are herein meant the beams containing specific information for independent user devices, and determining the performance that the base station **105** may offer over the respective network cell **110.** The traffic beams may relate to one or more logical channels, such as traffic channel.

According to an embodiment, the beamforming active antenna of the cellular communication system **100** is described by a single traffic radiation pattern (hereinafter referred to as envelope traffic radiation pattern) obtained by the envelope of a plurality of traffic radiation patterns each one indicative of amplitude and gain of respective elementary traffic beams having minimum angular amplitude *(i.e.,* maximum antenna gain) in each respective radiating direction.

For the purposes of the present disclosure, for each territorial pixel, one among the overlapping network cells identifies a respective best server network cell (not shown), *i.e.* the area served by the respective base station acting as best server in that territorial pixel.

According to an embodiment, a base station acts as a best server in a territorial pixel if:

- the respective network cell at least partially covers, or at least partially overlaps to, that territorial pixel, *i.e.* if the respective network cell is an overlapping network cell for that territorial pixel; according to an embodiment, a network cell is an overlapping network cell for a territorial pixel if a signal strength or level associated with the broadcast channel (hereinafter, broadcast signal strength) estimated for the respective base station is higher, in that territorial pixel, than a minimum broadcast signal strength *(e.g.,* a minimum signal strength that is required for a user device to connect to the base station), and

- the signal strength or level associated with the traffic channel (hereinafter, traffic signal strength) estimated for that base station is, in that territorial pixel, the highest among the traffic signal strengths associated with any other base station whose network cell is an overlapping network cell for that territorial pixel, and higher than a minimum traffic signal strength (should the traffic signal strength be lower than the minimum traffic signal strength, then the territorial pixel would be uncovered, *i.e.* there would be no base station serving that territorial pixel).

According to an embodiment, the minimum broadcast signal strength is different from the minimum traffic signal strength.

According to an embodiment, the broadcast signal strength is estimated, for each base station **105,** based on the broadcast radiation pattern of the respective radiating apparatus.

According to an embodiment, the traffic signal strength is estimated, for each base station **105,** based on the envelope traffic radiation pattern of the respective radiating apparatus. Since, as discussed above, the envelope traffic radiation pattern is obtained by the envelope of the traffic radiation patterns each one corresponding to an elementary traffic beam with minimum angular amplitude (and, hence, maximum antenna gain) in each radiating direction, the traffic signal strength estimated in a territorial pixel corresponds to a best or maximum traffic signal strength that can be guaranteed by the base station in that territorial pixel, obtained by ideally pointing the elementary traffic beam having minimum angular amplitude towards a user positioned in that territorial pixel (as better discussed in the following, this allows estimating in each territorial pixel the throughput that can be experienced by a user if this user would be the only user connected to the best server base station for that territorial pixel, hereinafter user throughput).

In the following, for each territorial pixel, the respective overlapping network cell identified by a base station acting as a best server in that territorial pixel will be also referred to as best server network cell, and the respective remaining overlapping network cells will be also referred to as interfering network cells. Thus, in the exemplary considered scenario, each territorial pixel is at least partially covered by a best server network cell and by one or more interfering network cells.

For the purposes of the present disclosure, the network cells **(110),** or at least a subset thereof, are provided *(i.e.,* generated or obtained) by a beamforming active antenna configured to radiate traffic beams in a plurality of radiating directions depending on number and arrangement of the array elements

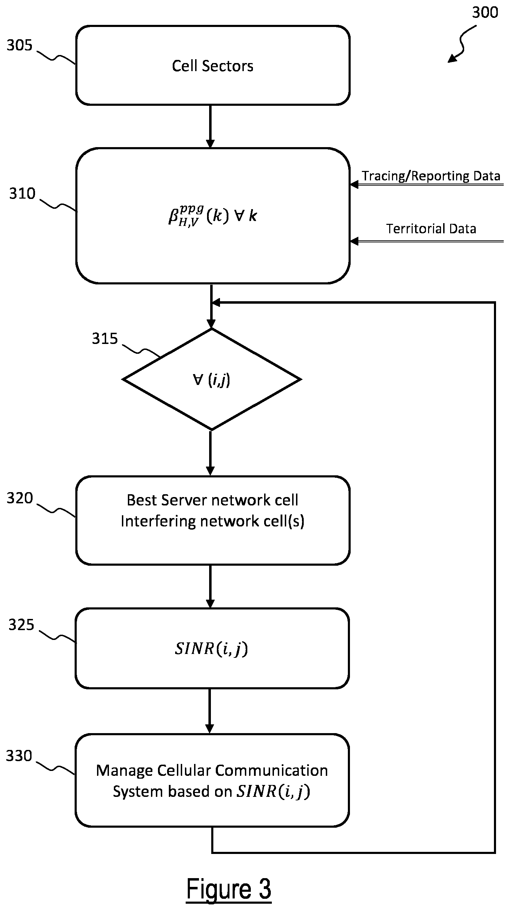

With reference to **Figure 3,** it shows an activity diagram of a method **300** according to an embodiment of the present invention.

According to an embodiment, the method **300** is implemented by the computation module **130.** However, this should not be construed limitatively: in fact, according to an embodiment, at least a subset of the method steps may be implemented by the core network **115,** and/or by one or more other entities or modules of the cellular communication system **100** (such as a SON module, not shown).

According to an embodiment, the method **300** comprises subdividing each network cell into a number $N_{ppg}$ *(e.g.,* a plurality) of cell sectors each one corresponding to a respective radiating direction among the plurality of radiating directions in which the corresponding beamforming active antenna is configured to radiate (action node **305).** By cell sector corresponding to a respective radiating direction, it is herein meant an angular/spatial sector or portion of network cell in the radiating direction (with the radiating direction that may identify a central or substantially central axis of the angular/spatial sector or portion, or a side thereof).

According to an embodiment, as expected in a practical scenario, the number $N_{ppg}$ of cell sectors into which each network cell is subdivided may differ over the network cells (or over groups of networks cells), *e.g.* depending on the radiating apparatuses (as discussed here below).

According to an embodiment, number and arrangement of the cell sectors depend on a resolution with which the radiating apparatus is capable of generating elementary traffic beams in the horizontal **H** and/or vertical **V** radiating directions.

According to an embodiment, the resolution with which the radiating apparatus is capable of generating elementary traffic beams in the horizontal **H** and/or vertical **V** radiating directions depends on a geometry of the radiating apparatus.

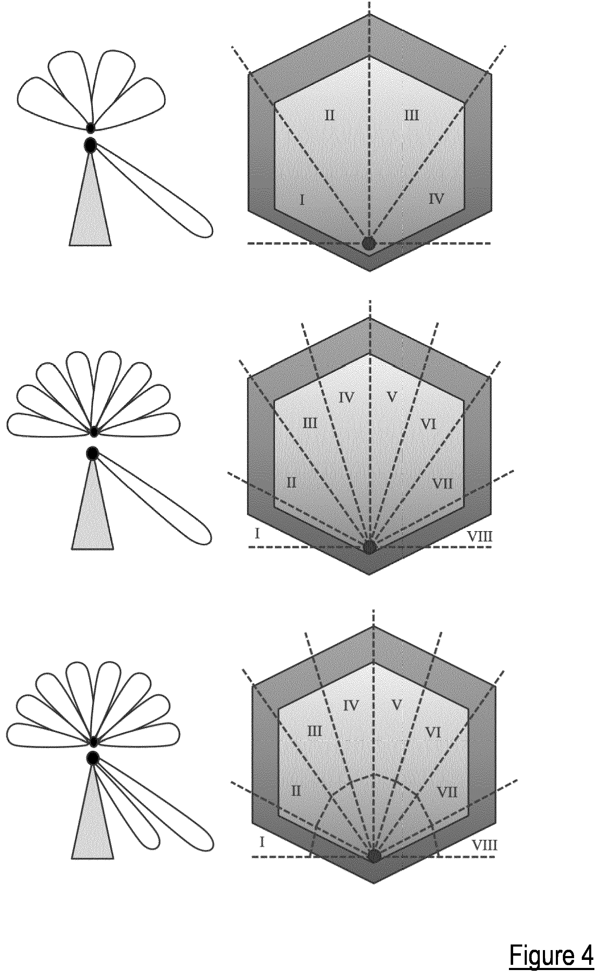

According to an embodiment, the resolution with which the radiating apparatus is capable of generating elementary beams in the horizontal **H** and/or vertical **V** radiating directions depends on the number of horizontal array elements $N_{AR}^{H}$ and on the number of vertical array elements $N_{AR}^{V}$. In this embodiment, the number $N_{ppg}$ of cell sectors corresponds to the product $N_{AR}^{H} \times N_{AR}^{H}$. This is schematically illustrated in **Figure 4** for the 4x1 beamforming antenna (top drawing), for the 8x1 beamforming antenna (middle drawing), and for the 8x2 beamforming antenna (bottom drawing): as visible in this figure, cell sectors I-IV ($N_{ppg}$=4) are obtained in the horizontal radiating direction for the 4x1 beamforming antenna, cell sectors I-VIII ($N_{ppg}$=8) are obtained in the horizontal radiating direction for the 8x1 beamforming antenna, and cell sectors I-VIII are obtained in both horizontal and vertical radiating directions ($N_{ppg}$=16) for the 8x2 beamforming antenna.

According to an embodiment, the method **300** comprises determining, for each $k$-th cell sector ($k$=1, 2, ..., $N_{ppg}$) of each network cell, an indication of a probability that the respective base station (*i.e.,* the respective beamforming active antenna) radiates traffic beams in that $k$-th cell sector (action node **310**). In the following, the indication of the probability that a base station (or, equivalently, the respective beamforming active antenna) radiates in a $k$-th cell sector will be concisely referred to as radiation probability $\beta_{H,V}^{ppg}(k)$ or radiation probability $\beta_{H,V}^{ppg}(k)$ associated with the k-th cell sector.

According to an embodiment, the radiation probability $\beta_{H,V}^{ppg}(k)$ associated with the k-th cell sector of a network cell depends on a propensity of the users (or, equivalently, of the user devices) to be physically located in that k-th cell sector and/or to generate service requests in that k-th cell sector of that network cell (hereinafter, user propensity).

According to an embodiment, the user propensity (and, hence, the radiation probability $\beta_{H,V}^{ppg}(k)$) may be based on the tracing/reporting data (*e.g.,* the tracing/reporting data stored in the network database **120**). Just as an example, the higher the traced procedures and/or events reported by user devices in a territorial pixel (or part thereof), the higher the user propensity in that territorial pixel.

According to an embodiment, the user propensity (and, hence, the radiation probability $\beta_{H,V}^{ppg}(k)$) may be based on the territorial data (*e.g.,* the territorial data stored in the territorial database **125**). Just as an example, the more structured and/or long the road network in a territorial pixel, the higher the user propensity in that territorial pixel. Just as another example, the higher the urbanization rate in a territorial pixel, the higher the user propensity in that territorial pixel. Just as a further example, the more the type or use of the territory in a territorial pixel is urban, the higher the user propensity in that territorial pixel.

According to an embodiment, the radiation probability $\beta_{H,V}^{ppg}(k)$ associated with the $k$-th cell sector may be determined as follows:

$$\beta_{H,V}^{ppg}(k) = \frac{\sum_{(i,j)\in\Omega_k} p(i,j)}{\sum_{k=1}^{N_{ppg}} p_k} = \frac{p_k}{\sum_{k=1}^{N_{ppg}} p_k}$$

wherein:

-   $p(i,j)$ is the user propensity associated with the territorial pixel identified by coordinates ($i,j$);
-   $\Omega_k$ is the set of territorial pixels belonging to the $k$-th cell sector. By territorial pixel belonging to a k-th cell sector is herein meant the territorial pixel that, based on geometrical considerations (such as shape and size of the territorial pixel and/or number of horizontal array elements $N_{AR}^{H}$ and number of vertical array elements $N_{AR}^{V}$), falls within the $k$-th cell sector; and
-   $p_k = \sum_{(i,j)\in\Omega} p_k(i,j)$ is the user propensity associated with each $k$-th cell sector.

In other words, the radiation probability $\beta_{H,V}^{ppg}(k)$ associated with the k-th cell sector of each network cell may be determined by normalizing the user propensity associated with the $k$-th cell sector on an overall user propensity associated with that network cell (*i.e.,* the $N_{ppg}$ user propensities associated with the $N_{ppg}$ cell sectors of that network cell).

As better understood from the following discussion, the radiation probabilities $\beta_{H,V}^{ppg}(k)$ associated with the *k*-th cell sectors of a network cell determine an interference reduction (when that network cell acts as an interfering network cell) and, hence, a SINR increase.

In embodiments in which the cellular network comprises, additionally to the beamforming active antennas, one or more conventional antennas (*i.e.,* one or more non-beamforming antennas):

$$N_{AR}^{H} = N_{AR}^{V} = 1$$

and hence a single cell sector ($N_{ppg}$=1) and a single radiation probability would be obtained for these antennas. In these embodiments, the radiation probability is equal to 1, in that:

$$p_k = \Sigma_{j=1}^{N_{ppg}} p_k.$$

which means that the corresponding radiating apparatus always radiates on the whole network cell.

In embodiments in which no user propensity associated with each k-th cell sector is determined based on the tracing/reporting data or on the territorial data, same user propensity may be assumed in all radiating directions, and hence each k-th cell sector would feature same radiation probability $\beta_{H,V}^{ppg}(k)$:

$$\beta_{H,V}^{ppg}(k) = \frac{1}{N_{ppg}} \qquad \forall k \in \left[1, N_{ppg}\right]$$

In embodiments in which interference reduction induced by the radiation probabilities $\beta_{H,V}^{ppg}(k)$ is requested not to fall below a predetermined threshold radiation probability $\beta_{threshold}$ (so as not to consider the interference contribution as practically negligible), if, for each network cell (*i.e.,* for each considered network cell), at least one cell sector exists whose radiation probability $\beta_{H,V}^{ppg}(k)$ is lower than or equal to the threshold radiation probability $\beta_{threshold}$ (hereinafter referred to as low radiation probability cell sector, as opposed to a high radiation probability cell sector whose radiation probability $\beta_{H,V}^{ppg}(k)$) is higher than the threshold radiation probability $\beta_{threshold}$), the radiation probability $\beta_{H,V}^{ppg}(k)$ may be set as:

$$\begin{cases} \beta_{H,V}^{ppg}(k) \rightarrow \beta_{threshold} & \text{if } \beta_{H,V}^{ppg}(k) \leq \beta_{threshold} \\ \beta_{H,V}^{ppg}(k) \rightarrow \beta_{H,V}^{ppg}(k) - \Delta_{TOT} \frac{\beta_{H,V}^{ppg}(k) - \beta_{threshold}}{\Sigma_{k:\beta_{H,V}^{ppg}(k)>\beta_{threshold}} \left(\beta_{H,V}^{ppg}(k) - \beta_{threshold}\right)} & \text{if } \beta_{H,V}^{ppg}(k) > \beta_{threshold} \end{cases}$$

with

$$\Delta_{TOT} = \sum_{k=1}^{N_{ppg}} \Delta_k = \sum_{k=1}^{N_{ppg}} max\left[\left(\beta_{threshold} - \beta_{H,V}^{ppg}(k)\right); 0\right]$$

wherein $\Delta_k$ represents a compensation amount to be added to the radiation probability $\beta_{H,V}^{ppg}(k)$ associated with the k-th low radiation probability cell sector of a network cell to reach the predetermined threshold radiation probability $\beta_{threshold}$, and $\Delta_{TOT}$ represents a compensation amount over the $N_{ppg}$ cell sectors of that network cell (*i.e.,* the compensation amount to be added, as a whole, to the low radiation probability cell sectors of that network cell). In other words, for each network cell, $\Delta_k$ represents a compensation amount indicative of a deviation between the threshold radiation probability $\beta_{threshold}$

and the radiation probability $\beta_{H,V}^{ppg}(k)$ associated with the k-th cell sector of that network cell, and $\Delta_{TOT}$ represents a compensation amount indicative of an overall deviation between the threshold radiation probability $\beta_{threshold}$ and the radiation probabilities $\beta_{H,V}^{ppg}(k)$ associated with the low radiation probability cell sectors of that network cell.

Thus, in these embodiments, for each network cell, if at least one low radiation probability cell sector exists, the radiation probability $\beta_{H,V}^{ppg}(k)$ may be set, for each *k*-th cell sector of the considered network cell:

- if the radiation probability $\beta_{H,V}^{ppg}(k)$ is lower than or equal to the threshold radiation probability $\beta_{threshold}$, at the threshold radiation probability $\beta_{threshold}$ (this ensures that each radiation probability is at least equal to or higher than a minimum radiation probability represented by the threshold radiation probability $\beta_{threshold}$); and

- if the radiation probability $\beta_{H,V}^{ppg}(k)$ is higher than the threshold radiation probability $\beta_{threshold}$, at the radiation probability $\beta_{H,V}^{ppg}(k)$ subtracted by the compensation amount $\Delta_{TOT}$ indicative of the overall deviation between the threshold radiation probability ($\beta_{threshold}$) and the radiation probabilities $\beta_{H,V}^{ppg}(k)$ of the low radiation probabilities cell sectors. According to an embodiment, if the radiation probability $\beta_{H,V}^{ppg}(k)$ is higher than the threshold radiation probability $\beta_{threshold}$, the radiation probability $\beta_{H,V}^{ppg}(k)$ may be set at the radiation probability $\beta_{H,V}^{ppg}(k)$ subtracted by a fraction of the compensation amount $\Delta_{TOT}$. According to the exemplary considered embodiment, the fraction of the compensation amount $\Delta_{TOT}$ is proportional to a deviation between the radiation probability $\beta_{H,V}^{ppg}(k)$ associated with the k-th high radiation probability cell sector and the threshold radiation probability $\beta_{threshold}$ - *i.e.,* ( $\beta_{H,V}^{ppg}(k) - \beta_{threshold}$ ) - with respect to an overall deviation between the radiation probabilities $\beta_{H,V}^{ppg}(k)$ associated with the high radiation probability cell sectors and the threshold radiation probability $\beta_{threshold}$ - *i.e.,*

$$\sum_{k:\beta_{H,V}^{ppg}(k)>\beta_{threshold}} \left(\beta_{H,V}^{ppg}(k) - \beta_{threshold}\right)$$

.

Back to the activity diagram, according to an embodiment the method **300** comprises, for each territorial pixel (or for each territorial pixel for which the SINR has to be computed), determining, among the plurality of network cells, a respective best server network cell *(i.e.,* the network cell overlapping that territorial pixel and identified by a base station acting as a best server in that territorial pixel) and at least one respective interfering network cell *(i.e.,* each network cell, other than the best server network cell, overlapping that territorial pixel) (action node **320**).

According to an embodiment, as discussed above, a base station acts as a best server in a territorial pixel if the respective broadcast signal strength is higher, in that territorial pixel, than the minimum broadcast signal strength, and the respective traffic signal strength is, in that territorial pixel, the highest one (and higher than the minimum traffic signal strength).

Back to the activity diagram, according to an embodiment the method **300** comprises computing the SINR for each territorial pixel (action node **325**).

According to an embodiment, the SINR *(SINR(i,j))* in the territorial pixel identified by coordinates *(i,j)* is computed as:

$$SINR(i,j) = \frac{c_{bs}(i,j)}{\sum_{p\neq bs} c_p(i,j) \cdot min\left(1, \frac{SC_{bs} \cdot NumPRB_{bs}}{SC_p \cdot NumPRB_k}\right) \cdot \alpha_p^t \cdot \beta_{p,H,V}^{ppg}(k) + N}$$

wherein:

$c_{bs}(i,j)$ is the (useful) signal strength related to the best server network cell associated with the territorial pixel;

$c_p(i,j)$ is the (interfering) signal strength related to the *p*-th interfering cell;
$SC_{bs}$ is the subcarrier spacing (in kHz) for the best server network cell;
$SC_p$ is the subcarrier spacing (in kHz) for the *p*-th interfering cell;
$NumPRB_{bs}$ is the total number of physical resource blocks available in the best server network cell;
$NumPRB_p$ is the total number of physical resource blocks available in the *p*-th interfering cell;

$\alpha_p^t$ is a time activity factor associated with the *p*-th interfering cell, *i.e.* a factor indicative of a cell load status of the p-th interfering cell, and particularly a factor indicative of the (average) fraction of time during which the p-th interfering cell is exchanging data with one or more user devices connected thereto;

$\beta_{p,H,V}^{ppg}(k)$ is the radiation probability associated with the *k*-th cell sector of the *p*-th interfering cell at least partially covering the territorial pixel, and
*N* is the thermal noise.

In other words, the SINR in each territorial pixel is computed based on the useful signal strength associated with the best server network cell, and (sum of) interfering signal strengths associated with the interfering network cells, wherein each interfering signal strength is weighted by a respective radiation probability ( $\beta_{p,H,V}^{ppg}(k)$ ) associated with the *k*-th cell sector of the respective *p*-th interfering network cell at least partially covering the territorial pixel.

Thus, the use of a beamforming active antenna in a 5G cellular network determines an increased SINR, and hence an increased user throughput (see, for example, the Throughput-SINR link level curve for estimating or computing the user throughput from the SINR), due to the attenuation of the interferential contributions that is induced by the radiation probabilities of the interfering network cells.

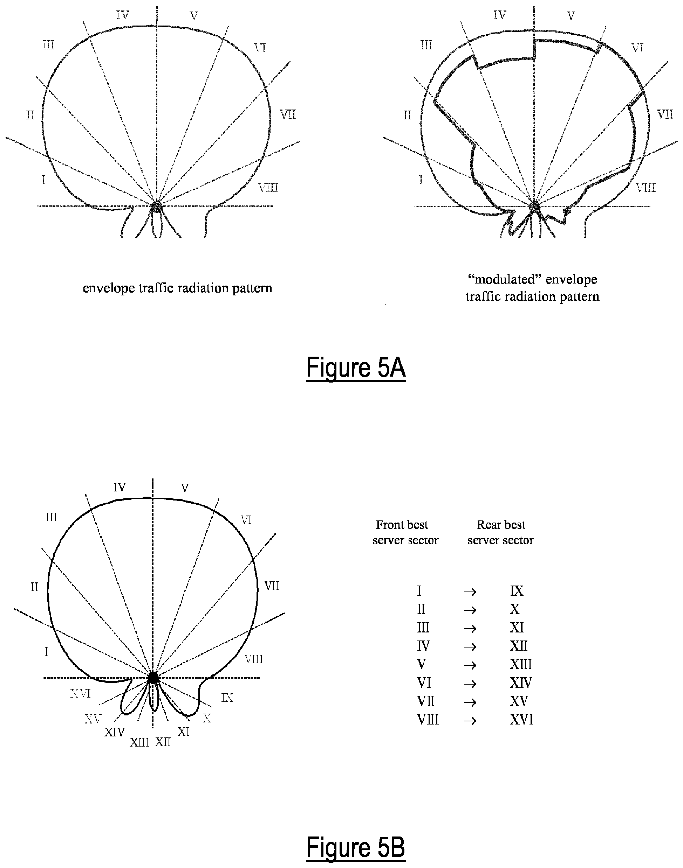

Particularly, the radiation probabilities associated with the $N_{ppg}$ cell sectors generate a "modulated" envelope traffic radiation pattern, *i.e.* an envelope traffic radiation pattern modulated as a function of the propensity of the users (or, equivalently, of the user devices) to be physically located and/or to generate service requests in the *k*-th cell sectors. An exemplary envelope traffic radiation pattern, and an exemplary "modulated" envelope traffic radiation pattern are represented in **Figure 5A** for an 8x1 beamforming antenna.

Although in the foregoing the cell sectors have been obtained by taking into account the main lobe of the envelope traffic radiation pattern (which give rise to a subdivision of the best server network cell into front cell sectors), the principles of the present invention equivalently apply in embodiments in which (as illustrated in **Figure 5A)** back lobes of the envelope traffic radiation pattern *(i.e.,* the side lobes directly behind the main lobe) activate contextually to the activation of the main lobe in the direction of a service request.

In this embodiment, the method **300** may further comprise subdividing the network cell into rear cell sectors *(i.e.,* cell sectors positioned behind the front cell sectors) each one opposite to a respective front cell sector with respect to the radiating apparatus *(i.e.,* the beamforming active antenna).

An example of opposite front and rear cell sector pairs for the envelope traffic radiation pattern of an 8x1 beamforming antenna is illustrated in **Figure 5B** (wherein the black circle represents the radiating apparatus).

According to an embodiment, the method **300** may comprise, upon determining the radiation probabilities ( $\beta_{H,V}^{ppg}(k)$ ) associated with the front cell sectors (as discussed above), assigning to each rear cell sector the radiation probability $\beta_{H,V}^{ppg}(k)$ associated with the respective opposite front cell sector.

Back to the activity diagram, according to an embodiment the method **300** comprises managing the cellular network (or, more generally, the cellular communication system **100)** based on the computed SINR (action node **330).**

According to an embodiment, the method **300** may comprise, at action node **330,** outputting *(e.g.,* on request) the computed SINR *(e.g.,* for statistical purposes).

According to an embodiment, the method **300** may comprise, at action node **330,** setting *(i.e.,* tuning or adjusting) one or more network parameters based on the computed SINR *(e.g.,* by exploiting functionalities of one or more among the core network **115,** the computation module **130** and a SON module).

According to an embodiment, action nodes **320-330** (or at least nodes **320** and **325)** are repeated for each territorial pixel. This is conceptually shown in the figure by decision node **315.**

Naturally, in order to satisfy local and specific requirements, a person skilled in the art may apply to the invention described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or method steps described in connection with any disclosed embodiment of the invention may be incorporated in any other embodiment.

For example, the cellular communication system may have a different structure. Moreover, any component of the the cellular communication system may be separated into several elements, or two or more components may be combined into a single element; furthermore, each component can be replicated to support the execution of the corresponding operations in parallel. It should also be noted that (unless otherwise indicated) any interaction between different components generally does not need to be continuous, and may be either direct or indirect through one or more intermediaries.

The present invention is defined by the appended claims.

### Claims

1. Method **(300)** for computing a signal-to-interference-plus-noise ratio in a territorial portion of a geographic area covered by a cellular network, wherein the cellular network comprises a plurality of network cells (110) provided by respective beamforming active antennas each one configured to radiate traffic beams in a plurality of radiating directions depending on number and arrangement of array elements of the beamforming active antenna, the method comprising:

   subdividing **(305)** each network cell into a plurality of cell sectors each one corresponding to a respective radiating direction among the plurality of radiating directions in which the corresponding beamforming active antenna is configured to radiate;
   **characterized by** comprising;

   determining **(310),** for each cell sector of each network cell, a respective radiation probability, $\beta_{H,V}^{ppg}(k)$, indicative of the probability that the respective beamforming active antenna radiates traffic beams in that cell sector, each radiation probability depending on a user propensity indicative of a propensity of users of the cellular network to be physically located and/or to generate service requests in that cell sector of that network cell;
   determining **(320),** among the plurality of network cells, a best server network cell and at least one interfering network cell associated with the territorial portion, and
   computing **(325)** the signal-to-interference-plus-noise ratio in the territorial portion based on a useful signal strength associated with the best server network cell, and at least one interfering signal strength associated with the at least one interfering network cell, wherein each interfering signal strength is weighted by a respective radiation probability, $\beta_{H,V}^{ppg}(k)$, associated with the cell sector of the respective interfering network cell at least partially covering the territorial portion.

2. Method **(300)** according to claim 1, wherein the user propensity is based on at least one among:

   - procedure and/or event traces of user devices within the territorial portion;
   - radio measurements reported by the user devices within the territorial portion;
   - territorial data related to the territorial portion.

3. Method **(300)** according to claim 2, wherein the territorial data comprises at least one among:

   - an indication of a road network in the territorial portion;
   - an indication of an urbanization rate in the territorial portion;
   - an indication of a type or use of the territory of the territorial portion.

4. Method **(300)** according to any of the preceding claims, wherein said determining **(310),** for each cell sector of each network cell, a respective radiation probability, $\beta_{H,V}^{ppg}(k)$, comprises normalizing the user propensity associated with the cell sector on an overall user propensity associated with the network cell.

5. Method **(300)** according to any of the preceding claims, wherein said determining **(310),** for each cell sector of each network cell, a respective radiation probability, $\beta_{H,V}^{ppg}(k)$, further comprises, if, for each network cell, at least one first cell sector exists whose radiation probability, $\beta_{H,V}^{ppg}(k)$, is lower than or equal to a threshold radiation probability, $\beta_{threshold}$:

  - setting the radiation probability of each first cell sector at the threshold radiation probability, $\beta_{threshold}$; and

  - for each second cell sector whose radiation probability, $\beta_{H,V}^{ppg}(k)$, is higher than the threshold radiation probability, $\beta_{threshold}$, setting the respective radiation probability at the radiation probability, $\beta_{H,V}^{ppg}(k)$, subtracted by a compensation amount indicative of an overall deviation between the threshold radiation probability, $\beta_{threshold}$, and the radiation probabilities, $\beta_{H,V}^{ppg}(k)$, of the at least one first cell sector.

6. Method **(300)** according to claim 5, wherein, for each second cell sector, the compensation amount is proportional to a deviation between the radiation probability, $\beta_{H,V}^{ppg}(k)$, associated with the second cell sector and the threshold radiation probability, $\beta_{threshold}$, with respect to an overall deviation between the radiation probabilities, $\beta_{H,V}^{ppg}(k)$, associated with the second cell sectors and the threshold radiation probability, $\beta_{threshold}$.

7. Method **(300)** according to any of the preceding claims, wherein

    said subdividing **(305)** each network cell into a plurality of cell sectors comprises subdividing **(305)** each network cell into a plurality of front and rear cell sectors associated with main and back lobes, respectively, of a radiation pattern of the respective beamforming active antenna, each rear cell sector being opposite to a respective front cell sector with respect to the respective beamforming active antenna, and wherein

    said determining **(310),** for each cell sector of each network cell, a respective radiation probability, $\beta_{H,V}^{ppg}(k)$, comprises determining the radiation probability, $\beta_{H,V}^{ppg}(k)$, for each front cell sector and assigning to each rear cell sector the radiation probability, $\beta_{H,V}^{ppg}(k)$, associated with the respective opposite front cell sector.

8. Method **(300)** according to any of the preceding claims, further comprising managing **(330)** the cellular network based on the computed signal-to-interference-plus-noise ratio.

9. Method **(300)** according to claim 8, wherein said managing **(330)** the cellular network based on the computed signal-to-interference-plus-noise ratio comprises at least one between:

    outputting the computed signal-to-interference-plus-noise ratio, and
    setting one or more parameters of the cellular network based on the computed signal-to-interference-plus-noise ratio.

10. System **(100)** for computing a signal-to-interference-plus-noise ratio in a territorial portion of a geographic area covered by a cellular network, wherein the cellular network comprises a plurality of network cells **(110)** provided by respective beamforming active antennas each one configured to radiate traffic beams in a plurality of radiating directions depending on number and arrangement of array elements of the beamforming active antenna, the system comprising a computation module **(130)** configured for:

    subdividing each network cell into a plurality of cell sectors each one corresponding to a respective radiating direction among the plurality of radiating directions in which the corresponding beamforming active antenna is configured to radiate;
    **characterized in that** the computation module is further configured for:

determining, for each cell sector of each network cell, a respective radiation probability, $\beta_{H,V}^{ppg}(k)$, indicative of the probability that the respective beamforming active antenna radiates traffic beams **in that** cell sector, each radiation probability depending on a user propensity indicative of a propensity of users of the cellular network to be physically located and/or to generate service requests **in that** cell sector of that network cell;

determining, among the plurality of network cells, a best server network cell and at least one interfering network cell associated with the territorial portion, and

computing the signal-to-interference-plus-noise ratio in the territorial portion based on a useful signal strength associated with the best server network cell, and at least one interfering signal strength associated with the at least one interfering network cell, wherein each interfering signal strength is weighted by a respective radiation probability, $\beta_{H,V}^{ppg}(k)$, associated with the cell sector of the respective interfering network cell at least partially covering the territorial portion.

## Patentansprüche

1.  Verfahren (300) zum Berechnen eines Signal-zu-Interferenz-plus-Rausch Verhältnisses (SINR, Signal-to-Interference-plus-Noise Ratio) in einem territorialen Teil eines geografischen Gebiets, das von einem zellularen Netzwerk abgedeckt ist, wobei das zellulare Netzwerk mehrere Netzwerkzellen (110) umfasst, die durch jeweilige strahlformende aktive Antennen bereitgestellt werden, von welchen jede konfiguriert ist, Verkehrsstrahlen in mehrere Strahlungsrichtungen auszustrahlen, abhängig von Anzahl und Anordnung von Array-Elementen der strahlformenden aktiven Antenne, wobei das Verfahren umfasst:

    Unterteilen (305) jeder Netzwerkzelle in mehrere Zellsektoren, wobei jeder einer entsprechenden Strahlungsrichtung von den mehreren Strahlungsrichtungen entspricht, in welchen die entsprechende strahlformende aktive Antenne zu strahlen konfiguriert ist;
    **dadurch gekennzeichnet, dass** es umfasst:

    Bestimmen (310), für jeden Zellsektor jeder Netzwerkzelle einer jeweiligen Strahlungswahrscheinlichkeit, $\beta_{H,V}^{ppg}(k)$, die die Wahrscheinlichkeit angibt, dass die jeweilige strahlformende aktive Antenne Verkehrsstrahlen in diesem Zellsektor ausstrahlt, wobei jede Strahlungswahrscheinlichkeit von einer Benutzertendenz abhängt, die eine Tendenz von Benutzern des zellularen Netzwerks angibt, sich physisch in diesem Zellsektor dieser Netzwerkzelle aufzuhalten und/oder Dienstanforderungen zu generieren;
    Bestimmen (320), von den mehreren Netzwerkzellen, einer besten Server-Netzwerkzelle und mindestens einer störenden Netzwerkzelle, die dem territorialen Teil zugeordnet ist, und
    Berechnen (325) des Signal-zu-Interferenz-plus-Rausch Verhältnisses in dem territorialen Teil basierend auf einer nützlichen Signalstärke, die der besten Server-Netzwerkzelle zugeordnet ist, und mindestens einer störenden Signalstärke, die der mindestens einen störenden Netzwerkzelle zugeordnet ist, wobei jede störende Signalstärke durch eine jeweilige Strahlungswahrscheinlichkeit, $\beta_{H,V}^{ppg}(k)$, gewichtet wird, die dem Zellsektor der jeweiligen störenden Netzwerkzelle zugeordnet ist, die mindestens teilweise den territorialen Teil abdeckt.

2.  Verfahren (300) nach Anspruch 1, wobei die Benutzertendenz auf mindestens einem der Folgenden basiert:

    - Prozedur- und/oder Ereignisspuren von Benutzervorrichtungen innerhalb des territorialen Teils;
    - Funkmessungen, die von den Benutzervorrichtungen innerhalb des territorialen Teils gemeldet werden;
    - territoriale Daten in Bezug auf den territorialen Teil.

3.  Verfahren (300) nach Anspruch 2, wobei die territorialen Daten mindestens eines der Folgenden umfassen:

    - eine Angabe eines Straßennetzwerks in dem territorialen Teil;
    - eine Angabe einer Urbanisierungsrate in dem territorialen Teil;
    - eine Angabe einer Art oder Verwendung des Territoriums des territorialen Teils.

4. Verfahren (300) nach einem der vorstehenden Ansprüche, wobei das Bestimmen (310), für jeden Zellsektor jeder Netzwerkzelle, einer jeweiligen Strahlungswahrscheinlichkeit, $\beta_{H,V}^{ppg}(k)$, Normalisieren der Benutzertendenz, die dem Zellsektor zugeordnet ist, auf einer Gesamtbenutzertendenz umfasst, die der Netzwerkzelle zugeordnet ist.

5. Verfahren (300) nach einem der vorstehenden Ansprüche, wobei das Bestimmen (310), für jeden Zellsektor jeder Netzwerkzelle, einer jeweiligen Strahlungswahrscheinlichkeit, $\beta_{H,V}^{ppg}(k)$, wenn für jede Netzwerkzelle, mindestens ein erster Zellsektor vorhanden ist, dessen Strahlungswahrscheinlichkeit, $\beta_{H,V}^{ppg}(k)$, kleiner oder gleich einer Schwellenwert-Strahlungswahrscheinlichkeit, $\beta_{Schwellenwert}$, ist, weiter umfasst:

- Einstellen der Strahlungswahrscheinlichkeit jedes ersten Zellsektors bei der Schwellenwert-Strahlungswahrscheinlichkeit, $\beta_{Schwellenwert}$, und

- für jeden zweiten Zellsektor, dessen Strahlungswahrscheinlichkeit, $\beta_{H,V}^{ppg}(k)$, höher als die Schwellenwert-Strahlungswahrscheinlichkeit, $\beta_{Schwellenwert}$, ist, Einstellen der jeweiligen Strahlungswahrscheinlichkeit bei der Strahlungswahrscheinlichkeit, $\beta_{H,V}^{ppg}(k)$, abzüglich eines Kompensationsmaßes, das eine Gesamtabweichung zwischen der Schwellenwert-Strahlungswahrscheinlichkeit, $\beta_{Schwellenwert}$, und den Strahlungswahrscheinlichkeiten, $\beta_{H,V}^{ppg}(k)$, des mindestens einen ersten Zellsektors angibt.

6. Verfahren (300) nach Anspruch 5, wobei, für jeden zweiten Zellsektor das Kompensationsmaß proportional zu einer Abweichung zwischen der Strahlungswahrscheinlichkeit, $\beta_{H,V}^{ppg}(k)$, die dem zweiten Zellsektor zugeordnet ist, und der Schwellenwert-Strahlungswahrscheinlichkeit, $\beta_{Schwellenwert}$, in Bezug auf eine Gesamtabweichung zwischen den Strahlungswahrscheinlichkeiten, $\beta_{H,V}^{ppg}(k)$, die den zweiten Zellsektoren zugeordnet sind, und der Schwellenwert-Strahlungswahrscheinlichkeit, $\beta_{Schwellenwert}$, ist.

7. Verfahren (300) nach einem der vorstehenden Ansprüche, wobei

das Unterteilen (305) jeder Netzwerkzelle in mehrere Zellsektoren Unterteilen (305) jeder Netzwerkzelle in mehrere vordere und hintere Zellsektoren umfasst, die Hauptbeziehungsweise Rückkeulen eines Strahlungsmusters der jeweiligen strahlformenden aktiven Antenne zugeordnet sind, wobei jeder hintere Zellsektor einem jeweiligen vorderen Zellsektor in Bezug auf die jeweilige strahlformende aktive Antenne entgegengesetzt ist, und wobei

das Bestimmen (310), für jeden Zellsektor jeder Netzwerkzelle, einer jeweiligen Strahlungswahrscheinlichkeit, $\beta_{H,V}^{ppg}(k)$, Bestimmen der Strahlungswahrscheinlichkeit, $\beta_{H,V}^{ppg}(k)$, für jeden vorderen Zellsektor und Zuordnen zu jedem hinteren Zellsektor der Strahlungswahrscheinlichkeit, $\beta_{H,V}^{ppg}(k)$, die dem jeweiligen entgegengesetzten vorderen Zellsektor zugeordnet ist, umfasst.

8. Verfahren (300) nach einem der vorstehenden Ansprüche, weiter umfassend Verwalten (330) des zellularen Netzwerks basierend auf dem berechneten Signal-zu-Interferenz-plus-Rausch Verhältnis.

9. Verfahren (300) nach Anspruch 8, wobei das Verwalten (330) des zellularen Netzwerks basierend auf dem berechneten Signal-zu-Interferenz-plus-Rausch Verhältnisses mindestens eines von Folgenden umfasst:

Ausgeben des berechneten Signal-zu-Interferenz-plus-Rausch Verhältnisses und
Einstellen eines oder mehrerer Parameter des zellularen Netzwerks basierend auf dem berechneten Signal-zu-Interferenz-plus-Rausch Verhältnis.

10. System (100) zum Berechnen eines Signal-zu-Interferenz-plus-Rausch Verhältnisses in einem territorialen Teil eines geografischen Gebiets, das von einem zellularen Netzwerk abgedeckt wird, wobei das zellulare Netzwerk mehrere Netzwerkzellen (110) umfasst, die durch jeweilige strahlformende aktive Antennen bereitgestellt werden, von welchen jede konfiguriert ist, Verkehrsstrahlen in mehrere Strahlungsrichtungen abhängig von Anzahl und Anordnung von Array-Elementen der strahlformenden aktiven Antenne auszustrahlen, wobei das System ein Berechnungsmodul (130) umfasst, das konfiguriert ist zum:

Unterteilen jeder Netzwerkzelle in mehrere Zellsektoren, wobei jeder einer entsprechenden Strahlungsrichtung von den mehreren Strahlungsrichtungen entspricht, in welchen die entsprechende strahlformende aktive Antenne zu strahlen konfiguriert ist;
**dadurch gekennzeichnet, dass** das Berechnungsmodul weiter konfiguriert ist zum:

Bestimmen, für jeden Zellsektor jeder Netzwerkzelle einer jeweiligen Strahlungswahrscheinlichkeit, $\beta_{H,V}^{ppg}(k)$, die die Wahrscheinlichkeit angibt, dass die jeweilige strahlformende aktive Antenne Verkehrsstrahlen in diesem Zellsektor ausstrahlt, wobei jede Strahlungswahrscheinlichkeit von einer Benutzertendenz abhängt, die eine Tendenz von Benutzern des zellularen Netzwerks angibt, sich physisch in diesem Zellsektor dieser Netzwerkzelle aufzuhalten und/oder Dienstanforderungen zu generieren;
Bestimmen, von den mehreren Netzwerkzellen, einer besten Server-Netzwerkzelle und mindestens einer störenden Netzwerkzelle, die dem territorialen Teil zugeordnet ist, und
Berechnen des Signal-zu-Interferenz-plus-Rausch Verhältnisses in dem territorialen Teil basierend auf einer nützlichen Signalstärke, die der besten Server-Netzwerkzelle zugeordnet ist, und mindestens einer störenden Signalstärke, die der mindestens einen störenden Netzwerkzelle zugeordnet ist, wobei jede störende Signalstärke durch eine jeweilige Strahlungswahrscheinlichkeit, $\beta_{H,V}^{ppg}(k)$, gewichtet wird, die dem Zellsektor der jeweiligen störenden Netzwerkzelle zugeordnet ist, die mindestens teilweise den territorialen Teil abdeckt.

## Revendications

1. Procédé (300) de calcul d'un rapport « signal sur brouillage plus bruit » dans une partie territoriale d'une zone géographique couverte par un réseau cellulaire, dans lequel le réseau cellulaire comprend une pluralité de cellules de réseau (110) fournies par des antennes actives de conformation de faisceau respectives qui sont chacune configurées pour rayonner des faisceaux de trafic dans une pluralité de directions de rayonnement en fonction du nombre et de l'agencement d'éléments de réseau de l'antenne active de conformation de faisceau, le procédé comprenant le fait de :

subdiviser (305) chaque cellule de réseau en une pluralité de secteurs de cellule, correspondant chacun à une direction de rayonnement respective parmi la pluralité de directions de rayonnement dans lesquelles l'antenne active de conformation de faisceau correspondante est configurée pour rayonner ;
**caractérisé en ce qu'**il comprend le fait de :

déterminer (310), pour chaque secteur de cellule de chaque cellule de réseau, une probabilité de rayonnement respective, $\beta_{H,V}^{ppg}(k)$, indiquant la probabilité que l'antenne active de conformation de faisceau respective rayonne des faisceaux de trafic dans ce secteur de cellule, chaque probabilité de rayonnement dépendant d'une propension d'utilisateur indiquant une propension des utilisateurs du réseau cellulaire à être physiquement situés, et/ou à générer des demandes de service, dans ce secteur de cellule de cette cellule de réseau ;
déterminer (320), parmi la pluralité de cellules de réseau, une cellule de réseau de meilleur serveur, et au moins une cellule de réseau brouilleuse associée à la partie territoriale, et
calculer (325) le rapport « signal sur brouillage plus bruit » dans la partie territoriale sur la base d'une intensité de signal utile associée à la cellule de réseau de meilleur serveur, et d'au moins une intensité de signal brouilleur associée à l'au moins une cellule de réseau brouilleuse, dans laquelle chaque intensité de signal brouilleur est pondérée par une probabilité de rayonnement respective, $\beta_{H,V}^{ppg}(k)$, associée au secteur de cellule de la cellule de réseau brouilleuse respective couvrant au moins partiellement la partie territoriale.

2. Procédé (300) selon la revendication 1, dans lequel la propension d'utilisateur est basée sur au moins l'un des éléments parmi :

- des traces de procédure et/ou d'événement de dispositifs utilisateurs dans la partie territoriale ;
- des mesures radio signalées par les dispositifs utilisateurs dans la partie territoriale ;
- des données territoriales relatives à la partie territoriale.

3.  Procédé (300) selon la revendication 2, dans lequel les données territoriales comprennent au moins une indication parmi :

- une indication d'un réseau routier dans la partie territoriale ;
- une indication d'un taux d'urbanisation dans la partie territoriale ;
- une indication d'un type ou d'une utilisation du territoire de la partie territoriale.

4.  Procédé (300) selon l'une quelconque des revendications précédentes, dans lequel ladite détermination (310), pour chaque secteur de cellule de chaque cellule de réseau, d'une probabilité de rayonnement respective, $\beta_{H,V}^{ppg}(k)$, comprend la normalisation de la propension d'utilisateur associée au secteur de cellule sur une propension d'utilisateur globale associée à la cellule de réseau.

5.  Procédé (300) selon l'une quelconque des revendications précédentes, dans lequel ladite détermination (310), pour chaque secteur de cellule de chaque cellule de réseau, d'une probabilité de rayonnement respective, $\beta_{H,V}^{ppg}(k)$, comprend en outre, si, pour chaque cellule de réseau, au moins un premier secteur de cellule existe dont la probabilité de rayonnement, $\beta_{H,V}^{ppg}(k)$, est inférieure ou égale à une probabilité de rayonnement de seuil, $\beta_{threshold}$, le fait de :

- définir la probabilité de rayonnement de chaque premier secteur de cellule sur la probabilité de rayonnement de seuil, $\beta_{threshold}$ ; et

- pour chaque deuxième secteur de cellule dont la probabilité de rayonnement, $\beta_{H,V}^{ppg}(k)$, est supérieure à la probabilité de rayonnement de seuil, $\beta_{threshold}$, définir la probabilité de rayonnement respective sur la probabilité de rayonnement, $\beta_{H,V}^{ppg}(k)$, soustraite d'une quantité de compensation indiquant un écart global entre la probabilité de rayonnement de seuil, $\beta_{threshold}$, et les probabilités de rayonnement, $\beta_{H,V}^{ppg}(k)$, de l'au moins un premier secteur de cellule.

6.  Procédé (300) selon la revendication 5, dans lequel, pour chaque deuxième secteur de cellule, la quantité de compensation est proportionnel à un écart entre la probabilité de rayonnement, $\beta_{H,V}^{ppg}(k)$, associée au deuxième secteur de cellule et la probabilité de rayonnement de seuil, $\beta_{threshold}$, par rapport à un écart global entre les probabilités de rayonnement $\beta_{H,V}^{ppg}(k)$, associées aux deuxièmes secteurs de cellule et la probabilité de rayonnement de seuil, $\beta_{threshold}$.

7.  Procédé (300) selon l'une quelconque des revendications précédentes, dans lequel

ladite subdivision (305) de chaque cellule de réseau en une pluralité de secteurs de cellule comprend la subdivision (305) de chaque cellule de réseau en une pluralité de secteurs de cellule avant et arrière associés à des lobes principaux et arrière, respectivement, d'un diagramme de rayonnement de l'antenne active de conformation de faisceau respective, chaque secteur de cellule arrière étant opposé à un secteur de cellule avant respectif par rapport à l'antenne active de conformation de faisceau respective, et dans lequel ladite détermination (310), pour chaque secteur de cellule de chaque cellule de réseau, d'une probabilité de rayonnement respective, $\beta_{H,V}^{ppg}(k)$, comprend la détermination de la probabilité de rayonnement, $\beta_{H,V}^{ppg}(k)$, pour chaque secteur de cellule avant, et l'attribution, à chaque secteur de cellule arrière, de la probabilité de rayonnement, $\beta_{H,V}^{ppg}(k)$, associée au secteur de cellule avant opposé respectif.

8.  Procédé (300) selon l'une quelconque des revendications précédentes, comprenant en outre la gestion (330) du réseau cellulaire sur la base du rapport « signal sur brouillage plus bruit» calculé.

9.  Procédé **(300)** selon la revendication 8, dans lequel ladite gestion **(330)** du réseau cellulaire sur la base du rapport « signal sur brouillage plus bruit » calculé comprend au moins l'un parmi :

    la fourniture en sortie du rapport « signal sur brouillage plus bruit » calculé, et
    la définition d'un ou plusieurs paramètres du réseau cellulaire sur la base du rapport « signal sur brouillage plus bruit » calculé.

10. Système **(100)** de calcul d'un rapport « signal sur brouillage plus bruit » dans une partie territoriale d'une zone géographique couverte par un réseau cellulaire, dans lequel le réseau cellulaire comprend une pluralité de cellules de réseau **(110)** fournies par des antennes actives de conformation de faisceau respectives qui sont chacune configurées pour rayonner des faisceaux de trafic dans une pluralité de directions de rayonnement en fonction du nombre et de l'agencement d'éléments de réseau de l'antenne active de conformation de faisceau, le système comprenant un module de calcul (130) configuré pour :

    subdiviser chaque cellule de réseau en une pluralité de secteurs de cellule, correspondant chacun à une direction de rayonnement respective parmi la pluralité de directions de rayonnement dans lesquelles l'antenne active de conformation de faisceau correspondante est configurée pour rayonner ;
    **caractérisé en ce que** le module de calcul est en outre configuré pour :

    > déterminer, pour chaque secteur de cellule de chaque cellule de réseau, une probabilité de rayonnement respective, $\beta_{H,V}^{ppg}(k)$, indiquant la probabilité que l'antenne active de conformation de faisceau respective rayonne des faisceaux de trafic dans ce secteur de cellule, chaque probabilité de rayonnement dépendant d'une propension d'utilisateur indiquant une propension des utilisateurs du réseau cellulaire à être physiquement situés, et/ou à générer des demandes de service, dans ce secteur de cellule de cette cellule de réseau ;
    > déterminer, parmi la pluralité de cellules de réseau, une cellule de réseau de meilleur serveur, et au moins une cellule de réseau brouilleuse associée à la partie territoriale, et
    > calculer le rapport « signal sur brouillage plus bruit » dans la partie territoriale sur la base d'une intensité de signal utile associée à la cellule de réseau de meilleur serveur, et d'au moins une intensité de signal brouilleur associée à l'au moins une cellule de réseau brouilleuse, dans laquelle chaque intensité de signal brouilleur est pondérée par une probabilité de rayonnement respective, $\beta_{H,V}^{ppg}(k)$, associée au secteur de cellule de la cellule de réseau brouilleuse respective couvrant au moins partiellement la partie territoriale.

Figure 1

| | Antenna Element |
| | Array Element |

4x1          8x1          8x2

# Figure 2A

in H          in H          in H
in V          in V          in V
4x1          8x1          8x2

# Figure 2B

305 — Cell Sectors

310 — $\beta_{H,V}^{ppg}(k) \; \forall \, k$

Tracing/Reporting Data

Territorial Data

315 — $\forall \, (i,j)$

320 — Best Server network cell
Interfering network cell(s)

325 — $SINR(i,j)$

330 — Manage Cellular Communication
System based on $SINR(i,j)$

300

Figure 3

Figure 4

envelope traffic radiation pattern

"modulated" envelope
traffic radiation pattern

## Figure 5A

| Front best server sector | | Rear best server sector |
|---|---|---|
| I | → | IX |
| II | → | X |
| III | → | XI |
| IV | → | XII |
| V | → | XIII |
| VI | → | XIV |
| VII | → | XV |
| VIII | → | XVI |

## Figure 5B

**EP 4 457 953 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8423047 B1